# EUROPEAN PATENT APPLICATION

(11) **EP 3 110 163 A1**
(43) Date of publication of application: **28.12.2016**
(21) Application number: 15752171.7
(22) Date of filing: 16.02.2015
(51) Int. Cl.: H04N 21/43, H04N 21/854

(54) **METHOD AND APPARATUS FOR PROCESSING MULTIMEDIA CONTENT**

(30) Priority: 20.02.2014 KR 20140019710
(71) Applicant: Samsung Electronics Co., Ltd., Suwon-si, Gyeonggi-do 16677 (KR)
(72) Inventor: LEE, Kyung-Il, Yongin-si Gyeonggi-do (KR)
(74) Representative: Nederlandsch Octrooibureau
(86) International application number: PCT/KR2015/001535
(87) International publication number: WO 2015/126113

(57) **Abstract**

A method and an apparatus for composing multimedia contents in an electronic device are provided. A method for using the electronic device can include acquiring a plurality of contents, acquiring data characteristic information relating to each of the contents, based on the data characteristic information, determining whether to reencode at least one of the contents, and composing the contents based on the determination result.

## Description

### BACKGROUND ART

The present disclosure relates generally to a method and an apparatus for composing multimedia contents in an electronic device.

Various multimedia services based on digital signal processing techniques such as digital broadcasting, multimedia computer application, and multimedia communication are developed and provided. An image signal is a very important medium in the multimedia service.

In recent, H.264/Advanced Video Coding (AVC) video coding standard of higher compression performance than Moving Picture Experts Group (MPEG)-2, H263, and MPEG-4 Visual video compression coding standard is emerging as a future video compression technique. Particularly, the H.264/AVC video coding standard is widely used in multichannel high-definition video compression, video transfer using Internet, cable modem, and a mobile communication network, and a video multimedia service such as digital data broadcasting in association with a future multimedia service such as digital Television (TV) and satellite and terrestrial Digital Multimedia Broadcasting (DMB).

One of the video multimedia services is a video composing service for composing or combining a plurality of videos. The video composing service receives a plurality of bitstreams coded based on the same codec (e.g., H.264/AVC) and provides a composite video bitstream arranged in a certain format. The composite image bitstream output through the video composing service can include data encoded with the same codec as the bitstream input for the video composing service. The composite image can include whole or part of the input image, and a location and a size, that is, the format of the input images of the composite image can be arbitrarily determined. The input images are composed based on predetermined composite image format information.

### DETAILED DESCRIPTION OF THE INVENTION

### TECHNICAL OBJECTS

A conventional video composing method for outputting the composite image bitstream from the plurality of the input bitstreams decodes the encoded video signals and then composes the reconstructed image data. For example, to provide the composite image bitstream using N-ary (N is an integer greater than 2) video bitstreams encoded based on H.264/AVC, an electronic device can restore each image by decoding the N-ary input bitstreams and then generate the composite image of a certain format with whole or part of the restored N-ary images. The electronic device can reencode the composite image based on H.264/AVC and thus generate and output the encoded composite image bitstream.

As such, a pixel area processing method can decode the bitstreams as many as the images to compose, compose them with the certain format, and then re-encode the composite image. Hence, when using the pixel area processing method, the electronic device is subject to a long time taken to compose the images due to the decoding/encoding processing, and hardware complexity for the decoding and the encoding. In addition, the electronic device can degrade the composing time for decoding/encoding the N-ary images. In addition, the electronic device, which requires an additional buffer for storing the decoded video so as to generate the composite image, increases buffer usage.

To provide the composing service, the electronic device generates the composite multimedia content using reencoding or transcoding technology without determining whether the multimedia content (e.g., video) is decodable. Accordingly, the electronic device requires the unnecessary reencoding or transcoding on the undecodable multimedia content. Further, since the reencoding needs to operate N-ary decoders and one encoder, current consumption and Central Processing Unit (CPU) performance problems can occur in a mobile environment.

To address the above-discussed deficiencies of the prior art, it is a primary aspect of the present disclosure to provide a method and an apparatus for determining whether reencoding is necessary when composing multimedia data streams by comparing a syntax of a header for the multimedia data stream in an electronic device.

Another aspect of the present disclosure is to provide a method and an apparatus for generating header information for a multimedia data stream for multimedia contents to compose, by comparing syntax of a header for the multimedia data stream in an electronic device.

According to one aspect of the present disclosure, a method for using an electronic device can include acquiring a plurality of contents; acquiring data characteristic information relating to each of the contents; based on the data characteristic information, determining whether to reencode at least one of the contents; and composing the contents based on the determination result.

According to another aspect of the present disclosure, an electronic device can include a display, and a video processing module. The video processing module can acquire a plurality of contents, acquire data characteristic information relating to each of the contents, based on the data characteristic information, determine whether to reencode at least one of the contents, and compose the contents based on the determination result.

### BRIEF DESCRIPTION OF THE DRAWINGS

FIG. 1 is a diagram of a network environment including an electronic device according to an exemplary embodiment of the present disclosure;
FIG. 2 is a detailed diagram of a video processing module in the electronic device according to an exemplary embodiment of the present disclosure;
FIG. 3 is a flowchart of a method for composing multimedia data streams in the electronic device according to an exemplary embodiment of the present disclosure;
FIG. 4 is a flowchart of a method for selecting a mode for composing the multimedia contents by comparing a header for the multimedia data stream in the electronic device according to an exemplary embodiment of the present disclosure;
FIG. 5 is a flowchart of a method for selecting the mode for composing the multimedia contents by comparing the header for the multimedia data stream in the electronic device according to an exemplary embodiment of the present disclosure;
FIG. 6 is a diagram of N-ary multimedia data streams composed according to an exemplary embodiment of the present disclosure;
FIG. 7 is a diagram of N-ary multimedia data streams composed according to an exemplary embodiment of the present disclosure; and
FIG. 8 is a block diagram of the electronic device according to an exemplary embodiment of the present disclosure.

### BEST MODE FOR EMBODYING THE INVENTION

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

As used in the present disclosure, terms such as "includes" or "may include" refer to the presence of the corresponding function, operation or feature, and do not limit the presence of additional functions, operations or features. Also, terms such as "includes" or "has" refers to the presence of characteristics, numbers, steps, operations, components or combinations thereof, and is not intended to exclude one or more additional characteristics, numbers, steps, operations, components or combinations thereof.

As used in the present disclosure, the term "or" is used to include any and all combination of terms listed. For examples, "A or B" includes only A, only B, or both A and B.

As used in the present disclosure, terms such as "first" or "second" may be used to describe various features, but do not limit such features. For example, the terms do not limit the order and/or the importance of their associated features. Such terms may be used to differentiate one feature from another. For example, a first user equipment (alternatively, "UE") and a second user equipment are both user equipment, but are different user equipment. For example, without departing from the scope of the present disclosure, a first component may be called a second component, and likewise, a second component may be called a first component.

If a component is said to be "connected with" or "connected to" another component, the component may be directly connected with, or connected to, the other component, or another component may exist in between. On the other hand, if a component is said to be "directly connected with" or "directly connected to" another component, it should be understood that no components exist in between.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Unless defined otherwise, all terms used herein have the same meaning as commonly understood by those of skill in the art. Such terms as those defined in a generally used dictionary are to be interpreted to have the meanings equal to the contextual meanings in the relevant field of art, and are not to be interpreted to have ideal or excessively formal meanings unless clearly defined in the present specification.

An electronic device according to various embodiments of the present disclosure can be a device including communication functionality. For example, the electronic device can include at least one of a smartphone, a tablet Personal Computer (PC), a mobile phone, a video phone, an e-book reader, a desktop PC, a laptop PC, a netbook computer, a Personal Digital Assistant (PDA), a Portable Multimedia Player (PMP), an MP3 player, a mobile medical appliance, a camera, and a wearable device (e.g., a head-mounted-device (HMD) such as electronic glasses, an electronic textiles, an electronic bracelet, an electronic necklace, an electronic appcessory, an electronic tattoo, and a smart watch).

According to an exemplary embodiment, the electronic device can be a smart home appliance having the communication functionality. The smart home appliance can include, for example, at least one of a television, a Digital Video Disk (DVD) player, an audio, a refrigerator, an air conditioner, a vacuum cleaner, an oven, a microwave oven, a washing machine, an air purifier, a set-top box, a TV box (e.g., Samsung HomeSync^{™}, AppleTV^{™}, or Google TV^{™}), game consoles, an electronic dictionary, a digital key, a camcorder, and a digital frame.

According to an exemplary embodiment, the electronic device can include at least one of various medical appliances (e.g., Magnetic Resonance Angiography (MRA), Magnetic Resonance Imaging (MRI), Computed Tomography (CT), X-ray, ultrasonicator)), a navigation device, a Global Positioning System (GPS) receiver, an Event Data Recorder (EDR), a Flight Data Recorder (FDR), an in-vehicle infotainment device, marine electronic equipment (e.g., marine navigation device and gyro compass), avionics, a security device, an automotive head unit, an industrial or home robot, an Automatic Teller's Machine (ATM) of a financial company, and a Point of Sale (POS) of a store.

According to an exemplary embodiment, the electronic device can include at least one of part of furniture or building/structure having the communication functionality, an electronic board, an electronic signature receiving device, a projector, and various gauges (e.g., gauges for water, electricity, gas, and radio wave). The electronic device according to embodiments of the present disclosure can be one or a combination of those various devices. The electronic device according to embodiments of the present disclosure can be a flexible device. Also, those skilled in the art shall understand that the electronic device according to embodiments of the present disclosure is not limited those devices.

Hereinafter, exemplary embodiments of the present disclosure provide an electronic device by referring to the attached drawings. The term 'user' used in embodiments of the present disclosure can represent a person who uses the electronic device or a device (e.g., artificial intelligent electronic device) which uses the electronic device.

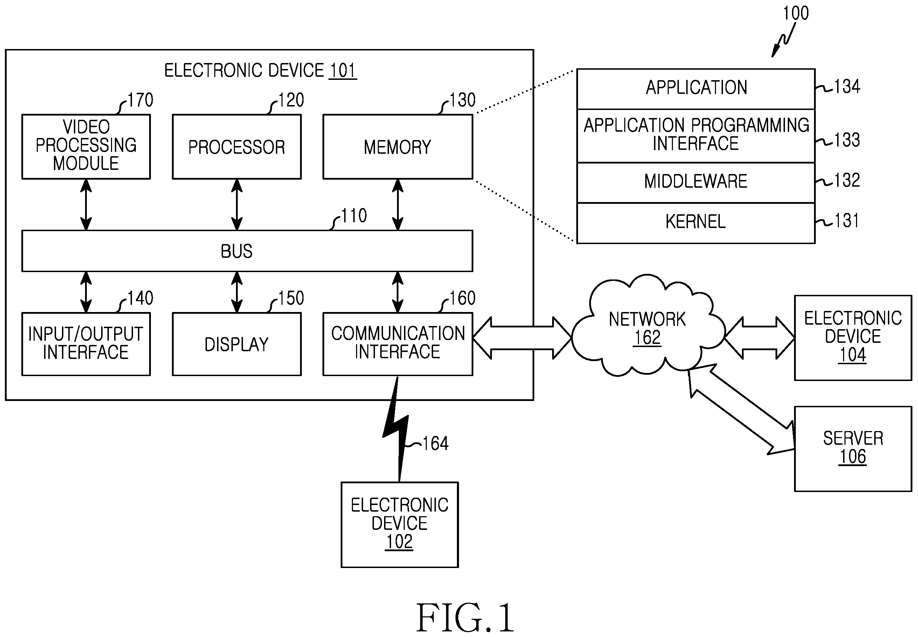

FIG. 1 depicts a network environment 100 including an electronic device 101 according to an exemplary embodiment of the present disclosure.

Referring to FIG. 1, the electronic device 101 can include a bus 110, a processor 120, a memory 130, an input/output interface 140, a display 150, a communication interface 160, and a video processing module 170.

The bus 110 can be a circuit for interlinking the above-stated components and transferring communication signals (e.g., control messages) between the above-stated components.

The processor 120 can, for example, receive an instruction from the other components (e.g., the memory 130, the input/output interface 140, the display 150, the communication interface 160, or the video processing module 170) via the bus 110, interpret the received instruction, and perform an operation or a data processing according to the interpreted instruction. Herein, the video processing module 170 can be included in the processor 120 or independent from the processor 120.

The memory 130 can store the instruction or the data received from or generated by the processor 120 or the other components (e.g., the input/output interface 140, the display 150, the communication interface 160, or the video processing module 170). For example, the memory 130 can include programming modules of a kernel 131, a middleware 132, an Application Programming Interface (API) 133, or an application 134. The programming modules can be implemented using software, firmware, or hardware, alone or in combination.

The kernel 131 can control or manage system resources (e.g., the bus 110, the processor 120, or the memory 130) used to execute the operation or the function of the other programming modules, for example, the middleware 132, the API 133, or the application 134. Also, the kernel 131 can provide an interface allowing the middleware 132, the API 133, or the application 134 to access and to control or manage the individual component of the electronic device 101.

The middleware 132 can relay data between the API 133 or the application 134 and the kernel 131. Also, for work requests received from the application 134, the middleware 132 can, for example, control (e.g., schedule or load balance) the work requests by giving priority of the system resource (e.g., the bus 110, the processor 120, or the memory 130) of the electronic device 101 to at least one application of the application 134.

The API 133, which is an interface for the application 134 to control the function provided from the kernel 131 or the middleware 132, can include at least one interface or function (e.g., instruction) for, for example, file control, window control, image processing, text control, or multimedia content composing.

According to exemplary embodiments, the application 134 can include a Short Message Service (SMS/Multimedia Messaging Service (MMS) application, an e-mail application, a calendar application, an alarm application, a health care application (e.g., an application for measuring an exercise or a blood sugar level), or an environment information application (e.g., an application for providing air pressure, humidity, or temperature information). Additionally or alternatively, the application 134 can be an application relating to information exchange between the electronic device 101 and an external electronic device (e.g., an electronic device 102 or an electronic device 104). The information exchange application can include, for example, a notification relay application for relaying particular information to the external electronic device, or a device management application for managing the external electronic device.

For example, the notification relay application can relay notification information of the other application (e.g., the SMS/MMS application, the e-mail application, the health care application, or the environment information application) of the electronic device 101 to the external electronic device (e.g., the electronic device 102 or the electronic device 104). Additionally or alternatively, the notification relay application can receive and forward the notification information from the external electronic device (e.g., the electronic device 102 or the electronic device 104) to the user. The device management application can manage (e.g., install, delete, or update) at least part of the function (e.g., turn-on/turn-off of the external electronic device (or some components) or display brightness (or resolution) control) of the external electronic device (e.g., the electronic device 102 or the electronic device 104) communicating with the electronic device 101, the application running on the external electronic device, or a service (e.g., a call service or a message service) provided by the external electronic device.

According to exemplary embodiments, the application 134 can include an application designated based on an attribute (e.g., a type of the electronic device) of the external electronic device (e.g., the electronic device 102 or the electronic device 104). For example, when the external electronic device is an MP3 player, the application 134 can include an application relating to music play. Similarly, when the external electronic device is a mobile medical device, the application 134 can include an application relating to health care. According to an embodiment, the application 134 can include at least one of the applications designated in the electronic device 101 or the application received from the external electronic device (e.g., a server 106, the electronic device 102, or the electronic device 104).

The input/output interface 120 can forward the instruction or the data input from the user through a sensor (e.g., an acceleration sensor, a gyro sensor) or an input device (e.g., a keyboard or a touch screen) to, for example, the processor 120, the memory 130, the communication interface 160, or the video processing module 170 via the bus 110. For example, the input/output interface 120 can forward the data of user's touch input through the touch screen, to the processor 120. Also, the input/output interface 120 can output the instruction or the data received from the processor 120, the memory 130, the communication interface 160, or the video processing module 170 via the bus 10, through the output device (e.g., a speaker or a display). For example, the input/output interface 120 can output voice data processed by the processor 120 to the user through the speaker.

The display 150 can display various information (e.g., multimedia data or text data) to the user.

The communication interface 160 can connect the communication between the electronic device 101 and the external device (e.g., the electronic device 102, the electronic device 104, or the server 106). For example, the communication interface 160 can support a network communication 162 (e.g., Internet, Local Area Network (LAN), Wire Area Network (WAN), telecommunication network, cellular network communication, satellite network, or Plain Old Telephone Service (POTS)), a short-range communication 164 (e.g., Wireless Fidelity (Wifi), Bluetooth (BT), Near Field Communication (NFC)), or wired communication (e.g., Universal Serial Bus (USB), High Definition Multimedia Interface (HDMI), Recommended Standard (RS) 232, or POTS). According to an exemplary embodiment, a protocol (e.g., short-range communication protocol, network communication protocol, or wired communication protocol) for the communication between the electronic device 101 and the external device can be supported by at least one of the application 134 or the middleware 132. The electronic devices 102 and 104 each can be the same as (e.g., the same type) or different from (e.g., the different type) the electronic device 101.

The video processing module 170 can process at least part of information obtained from the other components (e.g., the processor 120, the memory 130, the input/output interface 140, or the communication interface 160) and provide it to the user in various fashions. For example, the video processing module 170 can control at least part of the functions of the electronic device 101 so that the electronic device 101 composes the multimedia contents in association with the other electronic device (e.g., the electronic device 102, the electronic device 104, or the server 106) using or independently from the processor 120.

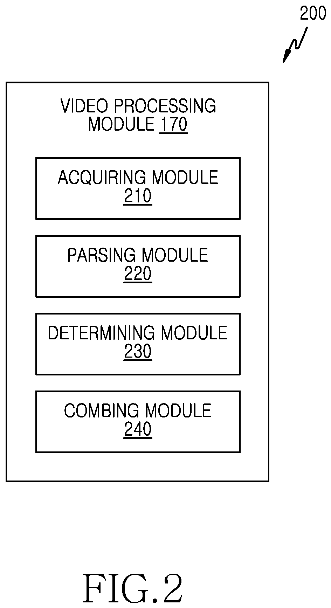

FIG. 2 is a block diagram 200 of the video processing module 170 of the electronic device (e.g., the electronic device 101) according to an exemplary embodiment of the present disclosure.

Referring to FIG. 2, the video processing module 170 can include an acquiring module 210, a parsing module 220, a determining module 230, and a combining module 240.

The acquiring module 210 can receive video stream captured by the external device (e.g., the electronic device 102) in real time or video data stored in a memory of the external device (e.g., the electronic device 102), through a first short-range communication (e.g., the short-range communication 164) with the external device (e.g., the electronic device 102).

According to another embodiment, the acquiring module 210 may receive the video stream captured by the external device (e.g., the electronic device 104, the server 106) in real time or the video data stored in the memory of the external device (e.g., the electronic device 104, the server 106), from the external device (e.g., the electronic device 104, the server 106) over the network 162.

The parsing module 220 can parse bitstream header information in the multimedia content received from the external device 102, 104 and 106. For example, the parsing module 220 parses the multimedia content into video and audio data and detects codec information relating to multimedia content play. According to an embodiment, for H.264 content, the parsing module 220 uses Sequence Parameter Set (SPS) and Picture Parameter Set (PPS) information of H.264 as the decoding information. Herein, the PPS indicates information about one picture including sequential slices, and the SPS indicates information about a sequence including some sequential pictures. For example, the PPS information can include more detailed information (picture encoding information, decoding parameter, etc.) than a range defined by the SPS, and the SSP information can include resolution and video format information as the whole sequence encoding information such as H.264 profile, and level. According to exemplary embodiments, other additional header than the SPS and the PPS can be further included and used.

The passed video and audio data and the SPS and PPS information can be stored in the memory 130 or a separate storage area.

The determining module 230 can compare the multiple data stream information (e.g., the SPS information and the PPS information) parsed by the parsing module 220 and determine whether to reencode when composing or combining a plurality of multimedia contents. For example, the determining module 230 can select reference SPS information and PPS information from the multiple SPS information and PPS information parsed from the multiple multimedia contents. The determining module 230 can determine whether to reencode the multimedia content by comparing the selected SPS information and PPS information with the other unselected SPS information and PPS information.

Based on the result of the determining module 230, the combining module 240 can generate one multimedia content by combining the plurality of the multimedia contents.

According to various embodiments, an electronic device can include a display and a video processing module. The video processing module can acquire a plurality of contents, acquire data characteristic information relating to each of the contents, based on the data characteristic information, determine whether to reencode at least one of the contents, and compose the contents based on the determination result.

According to various embodiments, the video processing module can select one of the data characteristic information relating to the contents, compare the selected data characteristic information and at least one other data characteristic information, and select a mode according to the comparison result.

According to various embodiments, when syntax of the selected data characteristic information and syntax of the other data characteristic information match in entirety, the video processing module can select a first mode.

According to various embodiments, when first partial syntax set in the selected data characteristic information and first partial syntax set in the other data characteristic information do not match, the video processing module can select a second mode, and the first partial syntax set in the data characteristic information can be additional information not affecting a decoding performance.

According to various embodiments, when second partial syntax set in the selected data characteristic information and second partial syntax set in the other data characteristic information do not match, the video processing module can select a third mode, and the second partial syntax set in the data characteristic information can be additional information affecting a decoding performance.

According to various embodiments, the third mode is a mode for combining the contents through at least one reencoding, the second mode is a mode for determining new data characteristic information by changing the syntax of the selected data characteristic information or the syntax of the other data characteristic information, and combining the contents using the determined data characteristic information, and the first mode is a mode for combining the contents by reusing the selected data characteristic information or the other data characteristic information.

According to various embodiments, in the second mode, the video processing module can determine new data characteristic information by changing the syntax of the selected data characteristic information or the syntax of the other data characteristic information.

According to various embodiments, the new data characteristic information can be data characteristic information applicable to both of a first content corresponding to the selected data characteristic information and a second content corresponding to the other data characteristic information.

According to various embodiments, to acquire the plurality of the contents, the video processing module can read contents stored in the electronic device or receive contents stored or generated by other electronic device from the other electronic device.

According to various embodiments, the syntaxes of the data characteristic information relating to the content can be divided into a plurality of levels according to significance.

According to various embodiments, the content can be a bitstream of H.264/Advanced Video Coding (AVC) format, or the data characteristic information can include at least one of Sequence Parameter Set (SPS) and Picture Parameter Set (PPS) headers.

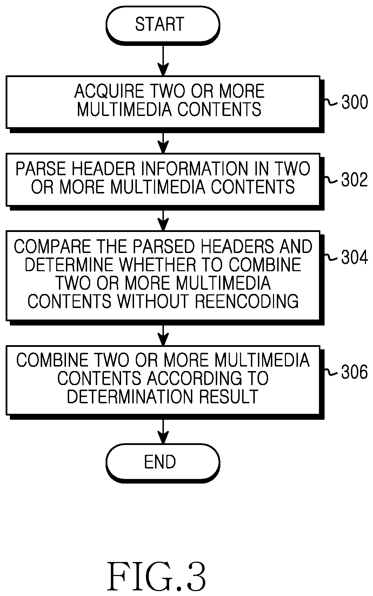

FIG. 3 is a flowchart of a method for composing multimedia contents in the electronic device according to an exemplary embodiment of the present disclosure.

Referring to FIG. 3, the electronic device (e.g., the electronic device 101 of FIG. 1) can acquire a plurality of multimedia contents in operation 300. For example, the electronic device can receive the video stream captured by the other electronic device or the video file stored in the other electronic device through the short-range communication or the network. According to another embodiment, the electronic device can load and obtain a multimedia content file stored in its internal memory.

In operation 302, the electronic device can parse the data stream header information in each of the acquired multimedia contents. For example, the electronic device parses the multimedia content to the video and audio data and detects the codec information relating to the multimedia content play. According to an embodiment, with the H.264 content, the electronic device can parse the SPS and PPS information of H.264. The electronic device can store the parsed video and audio data and the SPS and PPS information in the memory 130 or in a separate storage area.

In operation 304, the electronic device can compare the multiple decoding information parsed (e.g., the SPS information and the PPS information) and determine whether to reencode when composing or combining the plurality of the multimedia contents. For example, the electronic device can select the reference SPS information and PPS information from the multiple SPS information and PPS information parsed from the multiple multimedia contents, and determine whether to reencode the multimedia content by comparing the selected SPS information and PPS information with the other unselected SPS information and PPS information.

In operation 306, the electronic device can combine the plurality of the multimedia contents according to whether the reencoding is conducted.

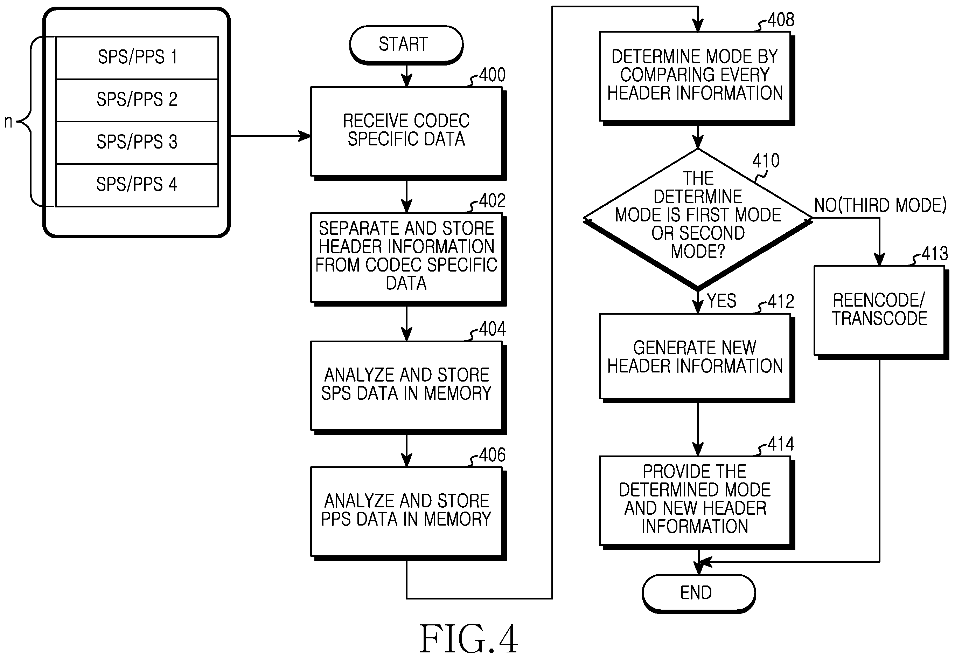

FIG. 4 is a flowchart of a method for selecting a mode for composing the multimedia contents by comparing a decoding header in the electronic device according to an exemplary embodiment of the present disclosure.

Referring to FIG. 4, the electronic device (e.g., the electronic device 101 of FIG. 1) can receive codec specific data in operation 400. That is, n-ary multimedia contents (e.g., H.264/AVC data) each can include the SPS/PPS information and video compress data (hereafter, referred to as a payload). The multimedia content including the SPS/PPS information and the payload can be muxed with a file format (e.g., MP4 file format). The n-ary SPS/PPSs in the file format can be referred to as the codec specific data.

In operation 402, the electronic device can separate and store the header information (e.g., the SPS/PPS information) from the codec specific data.

In operation 404, the electronic device can analyze syntax of the n-ary SPS data and store results in the memory.

In operation 406, the electronic device can analyze syntax of the n-ary PPS data and store results in the memory.

In operation 408, the electronic device can select the syntax of one SPS/PPS data and thus determine the mode by comparing the syntax of the selected SPS/PPS data with the syntax of the other (n-1)-ary SPS/PPS data.

According to an embodiment, while the mode is divided to a first mode, a second mode, and a third mode, the mode is not limited to the three modes and may be divided to three or more modes in exemplary embodiments of the present disclosure. The first mode is a mode where the n-ary input SPS/PPS information are the same, the second mode is a mode where some of the n-ary input SPS/PPS information have a different syntax value but do not require the reencoding, and the third mode is a mode requiring the reencoding. For example, the third mode is the mode where the n-ary input SPS/PPS information are different from each other or some of the n-ary input SPS/PPS information have the different syntax value and the different syntax value can cause a problem in decoding.

When not requiring the reencoding in composing or combining the plurality of the multimedia contents, the electronic device does not additionally require a video core. When requiring the reencoding, the n-ary decoders and one encoder should operate.

Also, without the reencoding, the electronic device can simply connect the received data bitstreams. In this case, the electronic device can save current consumption because many video cores are not needed.

For the third mode in operation 410, the electronic device performs the reencoding in operation 413. In operation 414, the electronic device can provide the header information corresponding to the third mode.

According to an embodiment, for the first mode or the second mode in operation 410, the electronic device can generate the header information (e.g., the SPS/PPS information) corresponding to the first mode or the second mode in operation 412. In operation 414, the electronic device can provide the determined mode (the mode determined in operation 408) and the header information corresponding to the determined mode.

When the second mode is determined, the input SPS/PPS information is in the different syntax but does not greatly affect the decoding. Since some syntax is the additional information (e.g., a Video Usability Information (VUI) parameter being video display information data) for assisting the decoding, the difference may not be affected. For example, when the SPS/PPS information with the VUI parameter and the SPS/PPS information without the VUI parameter exist together, the electronic device can use the SPS/PPS information without the VUI parameter because the VUI parameter may cause a problem. That is, for the decoding compatibility, the electronic device needs to select the SPS/PPS information for the generic purpose or to generate new SPS/PPS information according to the mode.

According to exemplary embodiments, when generating the new SPS/PPS information, the electronic device can further consider syntaxes constraint_set0_flag, constraint_set1_flag, constraint_set2_flag, constraint_set3_flag, level_idc, num_ref_frames, vui_parameters_present_flag according to the mode.

The value constraint_set_flag is a flag indicating the bitstream appropriate for baseline, main and high profile, and the value constraint_set_flag may differ according to the encoder. In this case, the encoder of the electronic device can generate incorrect constraint_set_flag but it is not a problem at all in the decoding. That is, while constraint_set_flag of the n-ary input bitstreams indicates the possible decoding in a particular profile of the bitstream, the decoder may not use this value in the actual decoding.

profile_idc indicates the profile of the encoded bitstream and includes baseline, main, extended, high, and high 10. Since a tool to use can differ according to the profile, the electronic device can determine to perform the reencoding when the profile differs.

When the value constraint_set0_flag is true, it can indicate the bitstream satisfying the baseline profile. When the value constraint_set1_flag is true, it can indicate the bitstream satisfying the main profile. When the value constraint_set2_flag is true, it can indicate the bitstream satisfying the extended profile. When the value constraint_set3_flag is true, it can indicate the bitstream satisfying the high profile.

level_idc indicates system capability for decoding the bitstream. Although this value differs in the n-ary input bitstreams, when the newly generated SPS information uses the greatest value, it may not affect the decoding. For example, when an image A is 3.1 and an image B is 4.0 in level, the level 4.0 may not cause a problem in decoding the image A.

num_ref_frames indicates the number of reference frames. Its maximum value is 16 frames and the maximum value can be determined according to the level. When this value differs in the n-ary bitstreams and the electronic device uses the greatest value, a problem may not arise in the decoding.

vui_parameters_present_flag is a flag indicating whether the vui syntax exists. The vui information includes the memory efficiency in the decoding or the additional information data of the image, and may not affect the decoding. For example, when the n-ary bitstreams include the bitstream including the vui data, new SPS may not use the vui data.

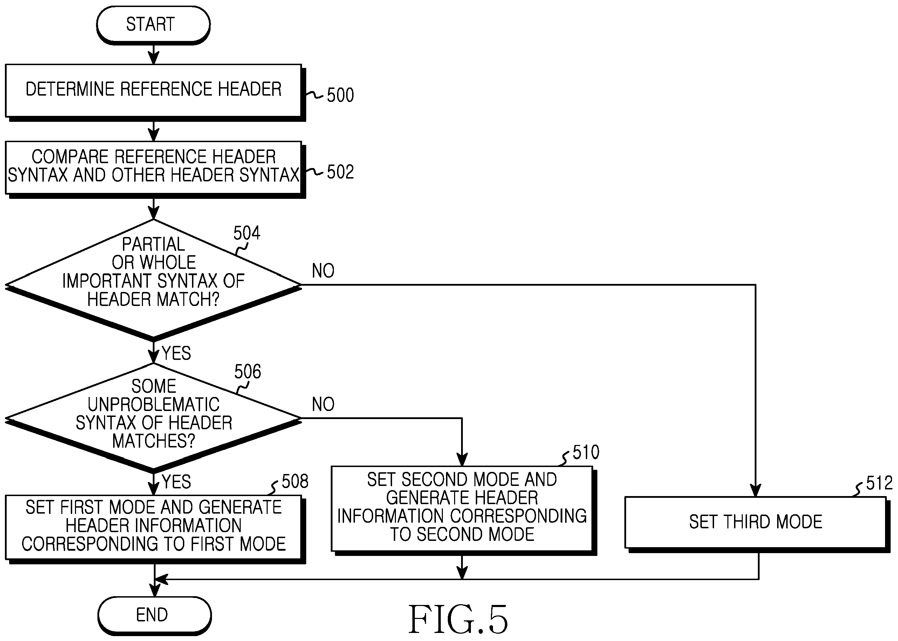

FIG. 5 is a flowchart of a method for selecting the mode for composing the multimedia contents by comparing the multimedia data stream header in the electronic device according to an exemplary embodiment of the present disclosure.

Referring to FIG. 5, the electronic device can determine a reference header by selecting one of the n-ary parsed SPS/PPS information in operation 500.

For example, one of the n-ary parsed SPS/PPS information can be selected at random, or the SPS/PPS information corresponding to the video stream captured by the electronic device or the video file stored can be selected. However, the reference SPS/PPS information can be selected in various manners in exemplary embodiments of the present disclosure.

In operation 502, the electronic device can compare the syntax (e.g., constraint_set0_flag, constraint_set1_flag, constraint_set2_flag, constraint_set3_flag, level_idc, num_ref_frames, vui_parameters_present_flag, VUI parameter, etc.) of the reference header (e.g., the PPS/SPS) with the syntax of the other header (e.g., the unselected PPS/SPS).

When some syntax or whole important syntax of the header does not match in operation 504, the electronic device can set the third mode in operation 512. The third mode can be the mode for conducting the reencoding. For example, the third mode is the mode where all of the n-ary input SPS/PPS information are different or some of the n-ary input SPS/PPS information have the different syntax value, and the some different syntax values (e.g., profile_idc, pic_order_cnt) can cause a problem in the decoding.

When some syntax or whole important syntax of the header matches in operation 504, the electronic device can compare whether some unimportant syntax or the whole unimportant syntax (e.g., constraint_set0_flag, constraint_set1_flag, constraint_set2_flag, constraint_set3_flag, level_idc, num_ref_frames, vui_parameters_present_flag, etc.) of the header matches in operation 506.

When some unimportant syntax or the whole unimportant syntax of the header does not match, the electronic device can set the second mode and newly generate header information corresponding to the second mode in operation 510. The second mode is the mode where some of the n-ary input SPS/PPS information has the different syntax value but the reencoding is not necessary.

When determining the second mode, the input SPS/PPS information is in the different syntaxes but does not greatly affect the decoding, and some syntax, which are the additional information (e.g., the VUI parameter being the video display information data) for assisting the decoding, may not be affected even though they are different from each other. For example, when the SPS/PPS information with the VUI parameter and the SPS/PPS information without the VUI parameter exist together, the electronic device can use the SPS/PPS information without the VUI parameter because the VUI parameter may cause a problem. That is, for the decoding compatibility, the electronic device needs to select the SPS/PPS information for the generic purpose or to generate new SPS/PPS information according to the mode.

According to exemplary embodiments, VUI parameter, constraint_set0_flag, constraint_set1_flag, constraint_set2_flag, constraint_set3_flag, level_idc, num_ref_frames, and vui_parameters_present_flag syntaxes do not affect the decoding performance. However, when two different syntaxes are applied, a problem can arise. For example, the header information corresponding to the second mode can be the SPS/PPS information used for the generic purpose for the decoding compatibility.

For example, when constraint_set_flag of the n-ary input bitstreams is different, the electronic device can use the reference bitstream value or set a correct value using profile_idc. level_idc is a value indicating the system capability for decoding the bitstream. Although this value differs in the n-ary input bitstreams, the greatest value can be used for the newly generated SPS information without affecting the decoding. For example, when the level_idc level of the image A is 3.1 and the level_idc level of the image B is 4.0, the level level_idc can be set to 4.0. When the value num_ref_frames is different, the greatest value is set. When vui_parameters_present_flag is different, the electronic device can determine not to use the UI parameter.

When some unimportant syntax or the whole unimportant syntax (e.g., constraint_set0_flag, constraint_set1_flag, constraint_set2_flag, constraint_set3_flag, level_idc, num_ref_frames, vui_parameters_present_flag, etc.) of the header matches, that is, the syntax of the reference header information and the syntax of the other header information matches in entirety, the electronic device can set the first mode in operation 508. The electronic device can generate the header information corresponding to the first mode. The first mode is the mode where all of the n-ary input SPS/PPS information are the same. For example, the first mode includes the same n-ary SPS/PPS information, and the header information corresponding to the first mode can be the reference header information or one of the n-ary SPS/PPS information.

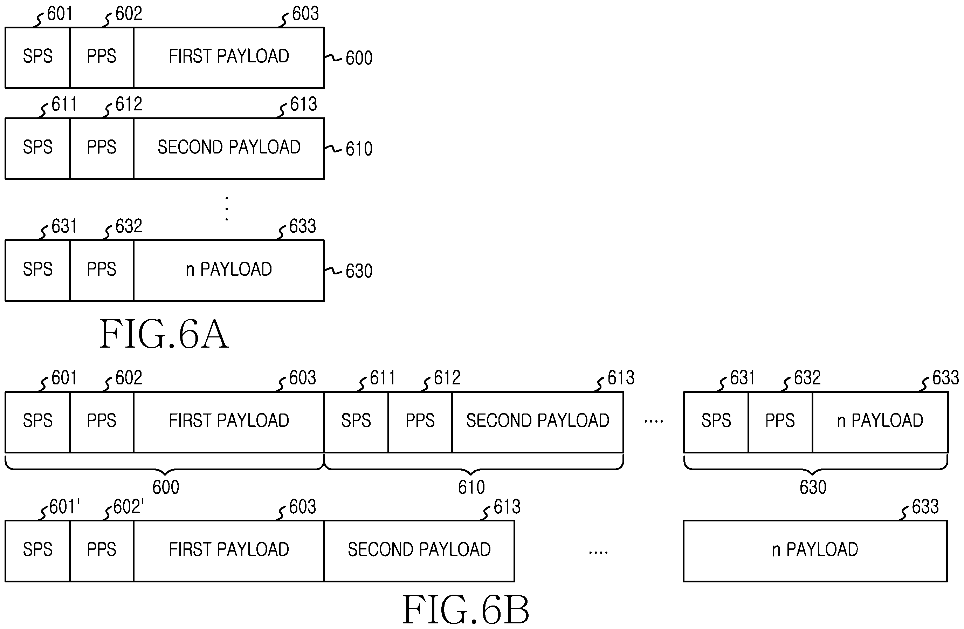

FIG. 6 depicts N-ary multimedia data streams composed according to an exemplary embodiment of the present disclosure.

Referring to FIG. 6, FIG. 6A depicts n-ary H.264/AVC based multimedia contents 600, 610, and 630. For example, the first multimedia content 600 can include a SPS 601, a PPS 602, and a first payload 603. The second multimedia content 610 can include a SPS 611, a PPS 612, and a first payload 613. The n-th multimedia content 630 can include a SPS 631, a PPS 632, and an n-th payload 633.

FIG. 6B depicts the n-ary H.264/AVC based multimedia contents 600, 610, and 630 composed by comparing the SPS/PPS header information. When the first mode or the second mode is set, the n-ary H.264/AVC based multimedia contents 600, 610, and 630 can be combined without reencoding by generating and prefixing the SPS/PPS information corresponding to the mode to each payload.

FIG. 6C depicts the n-ary H.264/AVC based multimedia contents 600, 610, and 630 composed by comparing the SPS/PPS header information. When the first mode or the second mode is set, the n-ary H.264/AVC based multimedia contents 600, 610, and 630 can be combined without reencoding by generating and prefixing representative SPS/PPS information 601' and 602' corresponding to the mode to the first payload 603.

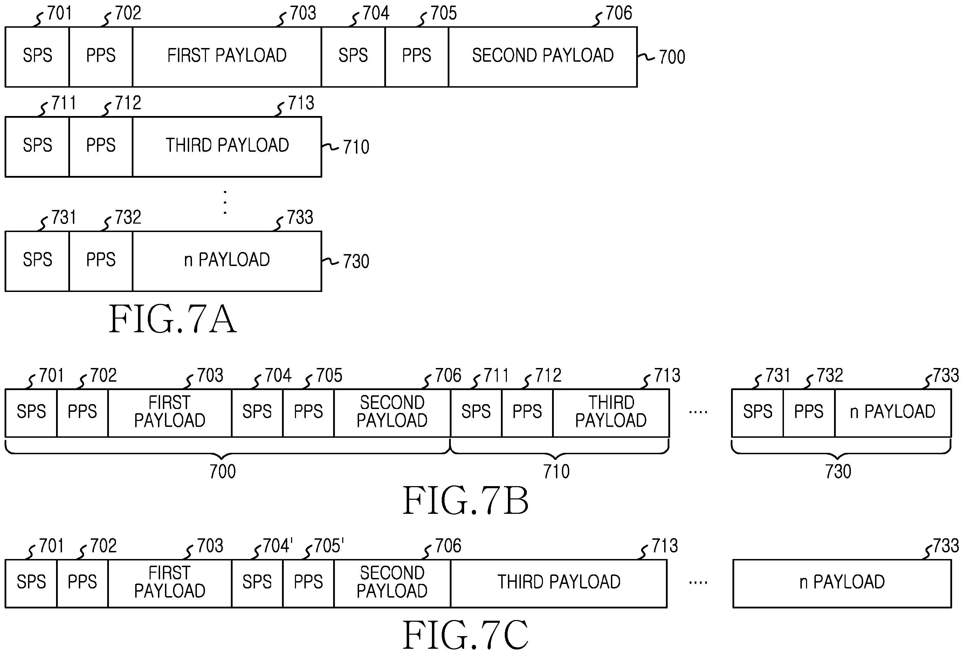

FIG. 7 depicts N-ary multimedia data streams composed according to an exemplary embodiment of the present disclosure.

Referring to FIG. 7, FIG. 7A depicts n-ary H.264/AVC based multimedia contents 700, 710, and 730. For example, the first multimedia content 700 can include a SPS 701, a PPS 702, a first payload 703, a SPS 704, a PPS 705, and a second payload 705. The second multimedia content 710 can include a SPS 711, a PPS 712, and a second payload 713. The n-th multimedia content 730 includes a SPS 731, a PPS 732, and an n-th payload 733.

FIG. 7B depicts the n-ary H.264/AVC based multimedia contents 700, 710, and 730 composed by comparing the SPS/PPS header information. When the first mode or the second mode is set, the n-ary H.264/AVC based multimedia contents 700, 710, and 730 can be combined without reencoding by generating and prefixing the SPS/PPS information corresponding to the mode to each payload.

For example, when the first multimedia content 700 includes the two SPS/PPS information and the second multimedia content 710 is combined after the second payload 706, whether the reencoding is necessary can be determined by comparing the SPS 704 and the PPS 705 of the first multimedia content 700 with the SPS 711 and the PPS 712 of the second multimedia content 710. That is, when the single first multimedia content 700 includes the multiple SPSs and PPSs, the SPS and the PPS to compare can be determined according the location for combining the second multimedia content 710 in the first multimedia content 700. When the second multimedia content 710 is combined in the middle of the first payload 703 or after the first payload 703 of the first multimedia content 700, the electronic device can compare the SPS 701 and the PPS 702 of the first multimedia content 700 with the SPS 711 and the PPS 712 of the second multimedia content 710.

FIG. 7C depicts the n-ary H.264/AVC based multimedia contents 700, 710, and 730 composed by comparing the SPS/PPS header information. When the first mode or the second mode is set, the n-ary H.264/AVC based multimedia contents 700, 710, and 730 can be combined without reencoding by generating and prefixing representative SPS/PPS information 704' and 705' corresponding to the mode to the second payload 706 of the first multimedia content 700.

According to various embodiments, a method for using an electronic device can include acquiring a plurality of contents; acquiring data characteristic information relating to each of the contents; based on the data characteristic information, determining whether to reencode at least one of the contents; and composing the contents based on the determination result.

According to various embodiments, the determining can include selecting one of the data characteristic information relating to the contents; comparing the selected data characteristic information and at least one other data characteristic information; and selecting a mode according to the comparison result.

According to various embodiments, the selecting of the mode according to the comparison result can include, when syntax of the selected data characteristic information and syntax of the other data characteristic information match in entirety, selecting a first mode.

According to various embodiments, the selecting of the mode according to the comparison result can include when first partial syntax set in the selected data characteristic information and first partial syntax set in the other data characteristic information do not match, selecting a second mode, wherein the first partial syntax set in the data characteristic information comprises additional information not affecting a decoding performance.

According to various embodiments, the selecting of the mode according to the comparison result can include when second partial syntax set in the selected data characteristic information and second partial syntax set in the other data characteristic information do not match, selecting a third mode, wherein the second partial syntax set in the data characteristic information comprises additional information affecting a decoding performance.

According to various embodiments, the third mode is a mode for combining the contents through at least one reencoding, the second mode is a mode for determining new data characteristic information by changing the syntax of the selected data characteristic information or the syntax of the other data characteristic information, and combining the contents using the determined data characteristic information, and the first mode is a mode for combining the contents by reusing the selected data characteristic information or the other data characteristic information.

According to various embodiments, in the second mode, the method can further include determining new data characteristic information by changing the syntax of the selected data characteristic information or the syntax of the other data characteristic information.

According to various embodiments, the new data characteristic information can be data characteristic information applicable to both of a first content corresponding to the selected data characteristic information and a second content corresponding to the other data characteristic information.

According to various embodiments, the acquiring of the plurality of the contents can include at least one of reading contents stored in the electronic device; or receiving contents stored or generated by other electronic device from the other electronic device.

According to various embodiments, the syntaxes of the data characteristic information relating to the content can be divided into a plurality of levels according to significance.

According to various embodiments, the content is a bitstream of H.264/Advanced Video Coding (AVC) format, and the data characteristic information can include at least one of Sequence Parameter Set (SPS) and Picture Parameter Set (PPS) headers.

According to various embodiments, the method can further include combining the plurality of the contents according to the determination result.

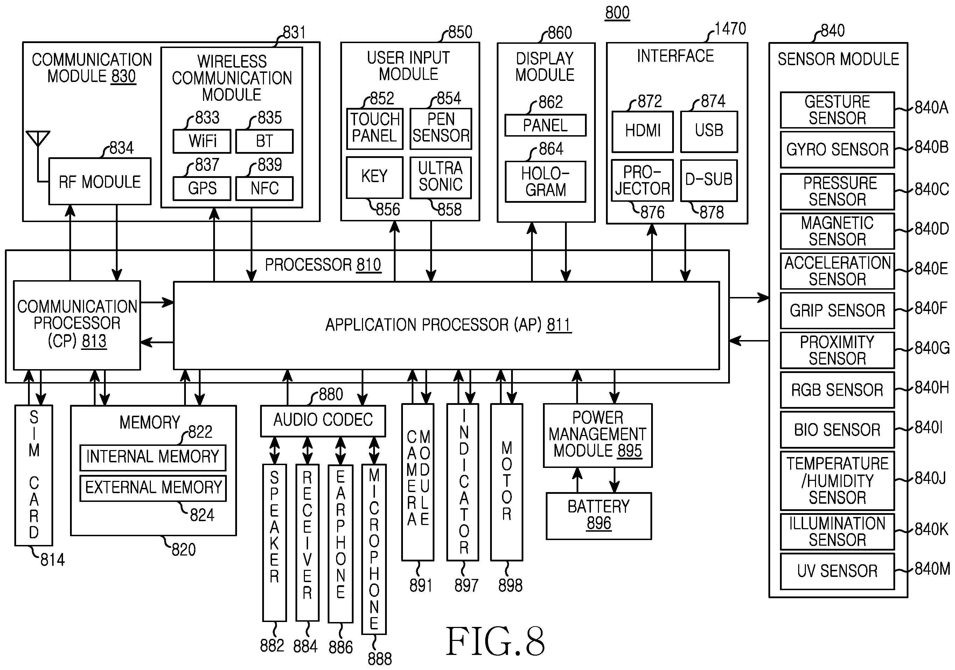

FIG. 8 is a block diagram 800 of an electronic device 801 according to an exemplary embodiment of the present disclosure. The electronic device 800 can configure all or part of, for example, the electronic device 101 of FIG. 1. Referring to FIG. 8, the electronic device 800 can include one or more processors 810, a Subscriber Identification Module (SIM) card 814, a memory 820, a communication module 830, a sensor module 840, a user input module 850, a display module 860, an interface 870, an audio codec 880, a camera module 891, a power management module 895, a battery 896, an indicator 897, or a motor 898.

The processor 810 (e.g., the processor 120) can include one or more Application Processors (APs) 811 or one or more Communication Processors (CPs) 813. While the AP 811 and the CP 813 are included in the processor 810 of FIG. 8, the AP 811 and the CP 813 can be included in different Integrated Circuit (IC) packages. According to an embodiment, the AP 811 and the CP 813 may be included in a single IC package.

The AP 811 can control a plurality of hardware or software components connected to the AP 811 by driving an operating system or an application program, and carry out various data processing and operations including the multimedia data. For example, the AP 811 can be implemented using a System on Chip (SoC). According to an embodiment, the processor 810 can further include a Graphic Processing Unit (GPU) (not shown).

The CP 813 can manage data links and convert a communication protocol in the communication between the electronic device 800 (e.g., the electronic device 101) and other electronic devices (e.g., the electronic device 102, the electronic device 104, or the server 106) connected over the network. The CP 813 can be implemented using, for example, a SoC. According to an embodiment, the CP 813 can perform at least part of a multimedia control function. The CP 813 can identify and authenticate the electronic device in the communication network using, for example, a subscriber identification module (e.g., the SIM card 814). Also, the CP 813 can provide the user with services including voice telephony, video telephony, text message, or packet data.

The CP 813 can control the data transmission and reception of the communication module 830. While the components of the CP 813, the power management module 895, and the memory 820 are separated from the AP 811 in FIG. 8, the AP 811 can include at least part (e.g., the CP 813) of those components.

According to an embodiment, the AP 811 or the CP 813 can load and process the instruction or the data received from its non-volatile memory or at least one of the other components, in a volatile memory. Also, the AP 811 or the CP 813 can store data received from at least one of the other components or generated by at least one of the other components, in the non-volatile memory.

The SIM card 814 can be a card including the subscriber identification module and inserted to a slot formed at a specific location of the electronic device. The SIM card 814 can include unique identification information (e.g., Integrated Circuit Card Identifier (ICCID)) or subscriber information (e.g., International Mobile Subscriber Identity (IMSI)).

The memory 820 (e.g., the memory 130) can include an internal memory 822 or an external memory 824. For example, the internal memory 822 can include at least one of the volatile memory (e.g., Dynamic Random Access Memory (DRAM), Static RAM (SRAM), Synchronous DRAM (SDRAM)) or the non-volatile memory (e.g., One-Time Programmable Read Only Memory (OTPROM), PROM, Erasable PROM (EPROM), Electrically EPROM (EEPROM), mask ROM, flash ROM, NAND flash memory, NOR flash memory). According to an embodiment, the internal memory 822 may be a Solid State Drive (SSD). The external memory 824 can further include a flash drive, for example, a Compact Flash (CF), a Secure Digital (SD), a Micro-SD, a Mini-SD, an extreme digital (xD), or a memory stick. The external memory 824 can be functionally connected to the electronic device 801 through various interfaces. According to an embodiment, the electronic device 801 can further include a storage device (or a storage medium) such as hard drive.

The communication module 830 (e.g., the communication interface 160) can include a wireless communication module 831 or a Radio Frequency (RF) module 834. The wireless communication module 831 can include, for example, a WiFi 833, a Bluetooth (BT) 835, a GPS 837, and an NFC 839. For example, the wireless communication module 831 can provide a wireless communication function using a radio frequency. Additionally or alternatively, the wireless communication module 831 can include a network interface (e.g., LAN card) or a modem for connecting the electronic device 800 to the network (e.g., Internet, LAN, WLAN, telecommunication network, cellular network, satellite network, or POTS).

The RF module 834 can process the data transmission and reception, for example, the transmission and reception of the RF signal. Although not depicted, the RF module 834 can include, for example, a transceiver, a Pulse Amp Modulation (PAM), a frequency filter, or a Low Noise Amplifier (LNA). Also, the RF module 834 can further include a component, for example, a conductor or a conducting wire, for sending and receiving electromagnetic waves in a free space in the wireless communication.

The sensor module 840 can measure a physical quantity or detect the operation status of the electronic device 800, and convert the measured or detected information to an electric signal. The sensor module 840 can include at least one of, for example, a gesture sensor 840A, a gyro sensor 840B, an atmospheric pressure sensor 840C, a magnetic sensor 840D, an acceleration sensor 840E, a grip sensor 840F, a proximity sensor 840G, a color sensor 840H (e.g., a Red Green Blue (RGB) sensor), a biometric sensor 840I, a temperature/humidity sensor 840J, a light sensor 840K, and an UltraViolet (UV) sensor 840M. Additionally or alternatively, the sensor module 840 can include, for example, an E-noise sensor (not shown), an electromyography (EMG) sensor (not shown), an electroencephalogram (EEG) sensor (not shown), an electrocardiogram (ECG) sensor (not shown), an infrared (IR) sensor (not shown), an iris sensor (not shown), or a fingerprint sensor (not shown). The sensor module 840 can further include a control circuit for controlling its one or more sensors.

The user input module 850 can include a touch panel 852, a (digital) pen sensor 854, a key 856, and an ultrasonic input device 858. The touch panel 852 can recognize the touch input using at least one of capacitive, resistive, infrared, and Surface Acoustic Wave (SAW) techniques. Also, the touch panel 852 may further include a control circuit. The capacitive touch panel can recognize the direct touch or the proximity. The touch panel 852 may further include a tactile layer. In this case, the touch panel 852 can provide a tactile response to the user.

The (digital) pen sensor 854 can be implemented using the same or similar method as or to the user's touch input, or using a separate recognition sheet. The key 856 can include, for example, a physical key button, an optical key, a keypad or a touch key. The ultrasonic input device 858, which obtains data by detecting microwave through a microphone (e.g., a microphone 888) in the electronic device, allows radio frequency identification through an input tool which generates an ultrasonic signal. According to an embodiment, the electronic device 800 may receive the user input from an external device (e.g., a network, a computer, or a server) connected using the communication module 830.

The display module 860 (e.g., the display 150) can include a panel 862, a hologram 864, or a projector (not shown). The panel 862 can employ, for example, a Liquid-Crystal Display (LCD) or an Active-Matrix Organic Light-Emitting Diode (AMOLED). The panel 862 can be implemented flexibly, transparently, or wearably. The panel 862 may be constructed as the single module together with the touch panel 852. The hologram 864 can present a three-dimensional image in the air using interference of light. The projector 866 can display an image by projecting the light onto a screen. The screen can be, for example, inside or outside the electronic device 800. According to an embodiment, the display 860 can further include a control circuit for controlling the panel 862, the hologram 864, or the projector 866.

The interface 870 can include, for example, an HDMI 872, a USB 874, an optical communication port 876, or a D-sub 878. The interface 870 can be included in, for example, the communication interface 160 of FIG. 1. Additionally or alternatively, the interface 870 can include, for example, a Mobile High-definition Link (MHL) (not shown), an SD/MMC (not shown), or Infrared Data Association (IrDA) (not shown).

The audio module 880 can convert the voice to an electric signal and vice versa. At least part of the audio module 880 can be included in, for example, the input/output interface 140 of FIG. 1. The audio module 880 can convert sound information which is input or output through a speaker 882, a receiver 884, an earphone 886, or the microphone 888.

The camera module 891 is a device for capturing a still picture and a moving picture. According to an embodiment, the camera module 891 can include one or more image sensors (e.g., a front sensor or a rear sensor), a lens (not shown), an Image Signal Processor (ISP) (not shown), or a flash (e.g., LED or xenon lamp) (not shown).

The power management module 895 can manage power of the electronic device 800. Although not depicted here, the power management module 895 can include, for example, a Power Management IC (PMIC), a charger IC, or a battery gauge or a fuel gauge.

The PMIC can be mounted in, for example, an IC or a SoC semiconductor. The charging type can be divided to a wired type and a wireless type. The charger IC can charge the battery and prevent overvoltage or overcurrent from flowing from a charger. According to an embodiment, the charger IC can include a charger IC for at least one of the wired charging type or the wireless charging type. For example, the wireless charging type includes magnetic resonance, magnetic induction, or microwave, and can further include an additional circuit for the wireless charging such as coil loop, resonance circuit, or rectifier.

The battery gauge can measure, for example, the remaining capacity of the battery 896 and the voltage, the current, or the temperature of the charging. The battery 896 can store or produce electricity, and supply the power to the electronic device 800 using the stored or produced electricity. The battery 896 can include, for example, a rechargeable battery or a solar battery.

The indicator 897 can display a specific status, for example, a booting state, a message state, or a charging state of the electronic device 800 or part (e.g., the AP 811). The motor 898 can convert the electric signal to a mechanic vibration. Although not depicted, the electronic device 800 can include a processor (e.g., the GPU) for supporting mobile TV. For example, the processor for supporting the mobile TV can process media data in conformity with Digital Multimedia Broadcasting (DMB), Digital Video Broadcasting (DVB), or media flow standard.

The aforementioned components of the electronic device can include one or more parts, and the name of the corresponding component can differ according to the type of the electronic device. The electronic device of the present disclosure can include at least one of the components, omit some components, or further include other components. Some of the components of the electronic device can be united to the single entity to carry out the same functions of the corresponding components.

The term "module" used in various exemplary embodiments of the present disclosure can indicate, for example, a unit including a combination of one or more of hardware, software, or firmware. The "module" can be interchangeably used with the term, for example, a unit, logic, a logical block, a component, or a circuit. The "module" can be a minimum unit or part of the components integrally formed. The "module" may be a minimum unit or part for one or more functions. The "module" can be implemented mechanically or electronically. For example, the "module" in the present disclosure can include at least one of an Application-Specific Integrated Circuit (ASIC) chip, Field-Programmable Gate Arrays (FPGAs), or a programmable-logic device for performing operations which are well known or to be invented.

According to various embodiments, at least part of the apparatus (e.g., modules or functions) or the method (e.g., operations) according to various exemplary embodiments of the present disclosure can be implemented as, for example, instructions stored in computer-readable storage media in the form of the programming module. When the instruction is executed by one or more processors (e.g., the processor 120), the one or more processors can perform the function corresponding to the instruction. The computer-readable storage medium can be, for example, the memory 130. At least part of the programming module can be realized (e.g., executed) by, for example, the processor 120. At least part of the programming module can include, for example, a module, a program, a routine, sets of instructions, or a process for one or more functions.

The computer-readable recording medium can include magnetic media such as hard disk, floppy disk and magnetic tape, optical media such as Compact Disc Read Only Memory (CD-ROM) and Digital Versatile Disc (DVD), magneto-optical media such as floptical disk, and hardware devices specifically configured to store and execute the program instruction (e.g., the programming module) such as ROM, RAM, and flash memory. Also, the program instruction can include not only a machine code made by a complier but also a high-level language code executable by a computer using an interpreter. The above-stated hardware device can serve as one or more software modules for fulfilling the operations of various exemplary embodiments of the present disclosure, and vice versa.

The programming module according to various exemplary embodiments of the present disclosure can include at least one of the aforementioned components, omit some components, or further include other components. The operations fulfilled by the modules, the programming modules, or other components according to various exemplary embodiments of the present disclosure can be carried out in sequence, in parallel, repeatedly, or heuristically. Also, some operations can be executed in a different order or omitted, or other operations can be added.

According to various embodiments, the storage medium storing the instructions can include a program for acquiring a plurality of contents, acquiring data characteristic information relating to each of the contents, and based on the data characteristic information, determining whether to reencode at least one of the contents.

As set forth above, since the electronic device determines whether to compose the multimedia data streams without reencoding by comparing the syntax of the header for the multimedia data stream, the number of the reencodings can be minimized in composing the multimedia data streams.

In addition, since the electronic device minimizes the number of the reencodings for composing the multimedia data, current consumption and CPU overload according to the encoding and the decoding can be reduced.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for using an electronic device, comprising:
acquiring a plurality of contents;
acquiring data characteristic information relating to each of the contents;
determining whether to re-encode at least one of the contents based on the data characteristic information; and
composing the plurality of contents based on the determination result.

2. The method of claim 1, wherein the determining comprises:
selecting one of the data characteristic information relating to the contents;
comparing the selected data characteristic information and at least one other data characteristic information; and
selecting a mode according to the comparison result.

3. The method of claim 2, wherein the selecting of the mode according to the comparison result comprises:
when syntax of the selected data characteristic information and syntax of the other data characteristic information match in entirety, selecting a first mode.

4. The method of claim 2, wherein the selecting of the mode according to the comparison result comprises:
when first partial syntax set in the selected data characteristic information and first partial syntax set in the other data characteristic information do not match, selecting a second mode,
wherein the first partial syntax set in the data characteristic information comprises additional information not affecting a decoding performance.

5. The method of claim 2, wherein the selecting of the mode according to the comparison result comprises:
when second partial syntax set in the selected data characteristic information and second partial syntax set in the other data characteristic information do not match, selecting a third mode,
wherein the second partial syntax set in the data characteristic information comprises additional information affecting a decoding performance.

6. The method of claims 3, 4, and 5, wherein the third mode is a mode for combining the contents through at least one re-encoding,
the second mode is a mode for determining new data characteristic information by changing the syntax of the selected data characteristic information or the syntax of the other data characteristic information, and combining the contents using the determined data characteristic information, and
the first mode is a mode for combining the contents by reusing the selected data characteristic information or the other data characteristic information.

7. The method of claim 1, wherein the syntaxes of the data characteristic information relating to the content are divided into a plurality of levels according to significance.

8. The method of claim 1, wherein the content is a bitstream of H.264/Advanced Video Coding (AVC) format, and
the data characteristic information comprises at least one of Sequence Parameter Set (SPS) and Picture Parameter Set (PPS) headers.

9. An electronic device comprising:
a display; and
a video processing module,
wherein the video processing module acquires a plurality of contents, acquires data characteristic information relating to each of the contents, determines whether to re-encode at least one of the contents based on the data characteristic information, and composes the plurality of contents based on the determination result.

10. The electronic device of claim 9, wherein the video processing module selects one of the data characteristic information relating to the contents, compares the selected data characteristic information and at least one other data characteristic information, and selects a mode according to the comparison result.

11. The electronic device of claim 10, wherein, when syntax of the selected data characteristic information and syntax of the other data characteristic information match in entirety, the video processing module selects a first mode.

12. The electronic device of claim 10, wherein, when first partial syntax set in the selected data characteristic information and first partial syntax set in the other data characteristic information do not match, the video processing module selects a second mode, and
whrerin the first partial syntax set in the data characteristic information comprises additional information not affecting a decoding performance.

13. The electronic device of claim 10, wherein, when second partial syntax set in the selected data characteristic information and second partial syntax set in the other data characteristic information do not match, the video processing module selects a third mode, and
wherein the second partial syntax set in the data characteristic information comprises additional information affecting a decoding performance.

14. The electronic device of claims 11, 12, and 13, wherein the third mode is a mode for combining the contents through at least one re-encoding,
the second mode is a mode for determining new data characteristic information by changing the syntax of the selected data characteristic information or the syntax of the other data characteristic information, and combining the contents using the determined data characteristic information, and
the first mode is a mode for combining the contents by reusing the selected data characteristic information or the other data characteristic information.

15. The electronic device of claim 9, wherein the content is a bitstream of H.264/Advanced Video Coding (AVC) format, and
the data characteristic information comprises at least one of Sequence Parameter Set (SPS) and Picture Parameter Set (PPS) headers.
